# EUROPEAN PATENT APPLICATION

(11) **EP 2 866 188 A1**
(43) Date of publication of application: **29.04.2015**
(21) Application number: 14189441.0
(22) Date of filing: 17.10.2014
(51) Int. Cl.: G06Q 30/06, G06Q 20/32

(54) **Method, terminal apparatus and server for transmitting NFC data**

(30) Priority: 25.10.2013 CN 201310512882
(71) Applicant: Xiaomi Inc., Beijing 100085 (CN)
(72) Inventor: Kangshang, Mingxue, 100085 Haidian Distirct (CN); Lin, Junqi, 100085 Haidian Distirct (CN); Xu, Lina, 100085 Haidian Distirct (CN)
(74) Representative: Robson, Aidan John

(57) **Abstract**

The present disclosure discloses a method, a terminal apparatus and a server for transmitting NFC data. The method includes: obtaining (101) tag data by scanning a pre-created NFC tag, wherein the tag data includes at least an identification code and transaction information of a third-party service provider; and generating (102) an order according to the identification code, the transaction information and user information; and sending (103) the order to a server, wherein the order is interpreted by a server to obtain the identification code, the transaction information and the user information, and the transaction information and the user information are sent to the third-party service provider corresponding to the identification code by the server to complete an operation of submitting the order.

## Description

### TECHNICAL FIELD

The present disclosure relates to the field of short-distance wireless communication technology, and more particularly, to a method, a terminal apparatus and a server for transmitting NFC data.

### BACKGROUND

Near Field Communication (NFC), also known as short-distance wireless communication, is a kind of short-distance high-frequency wireless communication technology, which allows non-contact point-to-point data transmission so as to exchange data among electronic apparatuses. This technology has evolved from contactless radio frequency identification (RFID), can be compatible downward with RFID, and is mainly used in handheld apparatuses such as a mobile phone to provide M2M (Machine to Machine) communication. Since NFC has natural safety, NFC technology is considered as having great application prospect in the field of mobile phone payment or the like.

NFC can be performed not only between two apparatuses having NFC recognition capability, but also between an NFC apparatus and a non-power NFC chip (so called as an NFC sticker or an NFC tag). An NFC-equipped smart phone can automatically carry out tasks by reading programs (which are pre-written by softwares) in an NFC tag.

However, these programs only can achieve functions to modify settings of a mobile phone, send text messages, start application programs or the like, and implementation of the functions is limited only within a terminal.

### SUMMARY

Embodiments of the present disclosure provide a method, a terminal apparatus and a server for transmitting NFC data, which are used to realize reduction of time costs of obtaining third-party services by a user through a mobile terminal and to improve convenience for obtaining the third-party services.

According to a first aspect of the embodiments of the present disclosure, there is provided a method for transmitting NFC data, including:
obtaining tag data by scanning a pre-created NFC tag, wherein the tag data includes at least an identification code and transaction information of a third-party service provider;
generating an order according to the identification code, the transaction information and user information; and
sending the order to a server;
wherein the order is interpreted by a server to obtain the identification code, the transaction information and the user information, and the transaction information and the user information are sent to the third-party service provider corresponding to the identification code by the server to complete an operation of submitting the order.

Some advantageous effects of the present disclosure may include: tag data in an NFC tag includes an identification code and transaction information of a third-party service provider, a terminal apparatus determines the third-party service provider and generates a corresponding order to be send to a server according to the identification code. Thus, a user does not need to use a service software or a website provided by a different third-party service provider to submit an order, and a server identifies a third-party service provider corresponding to an order, and sends the order to the corresponding third-party service provider. Thus, time for obtaining third-party services by the user through the mobile terminal is reduced and convenience for obtaining the third-party services is improved. In addition, since the third-party service provider can immediately begin to provide services for users after accessing to the server and registering without developing application programs or building a service website or a customer service system by its own, service costs are saved tremendously, and service efficiency is improved.

The method further including:
writing the identification code and the transaction information of the third-party service provider into the NFC tag.

Some advantageous effects of the present disclosure may include: an identification code and transaction information of a third-party service provider is pre-stored in an NFC tag, the information is not required to be input each time when a user creates an order. By simply scanning the NFC tag, the information can be automatically synthesized to form an order, thus time costs of obtaining third-party services by the user is reduced and convenience for obtaining the third-party services is improved.

The method further includes:
encrypting the user information and writing the encrypted user information into the NFC tag.

The method further includes:
decrypting the encrypted user information to obtain the user information.

Some advantageous effects of the present disclosure may include: user information is pre-stored in an NFC tag, the information is not required to be input each time when a user creates an order. By simply scanning the NFC tag, the information can be automatically synthesized to form an order, thus time costs of obtaining third-party services by the user is reduced, and convenience for obtaining the third-party services is improved.

The method further includes:
obtaining the user information locally, or obtaining the user information according to user input.

Some advantageous effects of the present disclosure may include: by storing user information locally or inputting the user information by a user, user privacy safety is improved, thus time costs of obtaining third-party services by the user is saved, and convenience for obtaining the third-party services is improved.

The method further includes: obtaining the user information through a sensor.

Some advantageous effects of the present disclosure may include: by obtaining user information through a server, accuracy and convenience for obtaining the user information are increased, user input is reduced, time costs of obtaining third-party services by a user is saved, and convenience for obtaining the third-party services is improved.

The method further includes:
receiving, in real-time, order status information generated in accordance with a processing situation of the order from the server or the third-party service provider.

Some advantageous effects of the present disclosure may include: a terminal apparatus obtains order status information in real-time, such that a user can know a processing situation of an order in real-time, and the user can conveniently query the processing situation of the order, thus convenience for obtaining third-party services is further improved.

According to a second aspect of the embodiments of the present disclosure, there is provided a terminal apparatus, including:
a scanning module configured to obtain tag data by scanning a pre-created NFC tag, wherein the tag data includes at least an identification code and transaction information of a third-party service provider;
an order generating module configured to generate an order according to the identification code, the transaction information and user information; and
a sending module configured to send the order to a server; wherein the order is interpreted by a server to obtain the identification code, the transaction information and the user information, and the transaction information and the user information are sent to the third-party service provider corresponding to the identification code by the server to complete an operation of submitting the order.

The terminal apparatus further includes:
a writing module configured to write the identification code and the transaction information of the third-party service provider into the NFC tag.

The terminal apparatus further includes: an encryption module;
the encryption module is configured to encrypt the user information; and
the writing module is configured to write the encrypted user information into the NFC tag;

The terminal apparatus further includes: a decryption module configured to decrypt the encrypted user information to obtain the user information.

The terminal apparatus further includes:
a storage module configured to store the user information; and
an obtaining module configured to obtain the user information from the storage module;

Or the terminal apparatus further includes:
an input obtaining module configured to obtain the user information according to user input.

The terminal apparatus further includes:
a sensor configured to obtain the user information.

The terminal apparatus further includes:
a receiving module configured to receive, in real-time, order status information generated in accordance with a processing situation of the order from the server or the third-party service provider.

According to a third aspect of the embodiments of the present disclosure, there is provided a terminal apparatus including a storage and one or more programs, wherein the one or more programs are stored in the storage and are configured to be executed by one or more processors, the one or more programs include instructions for performing operations of: obtaining tag data by scanning a pre-created NFC tag, wherein the tag data includes at least an identification code and transaction information of a third-party service provider;
generating an order according to the identification code, the transaction information and user information; and
sending the order to a server,
wherein the order is interpreted by a server to obtain the identification code, the transaction information and the user information, and the transaction information and the user information are sent to the third-party service provider corresponding to the identification code by the server to complete an operation of submitting the order.

According to a fourth aspect of the embodiments of the present disclosure, there is provided a method for transmitting NFC data, including:
receiving an order sent by a terminal apparatus, the order being generated by tag data obtained by scanning a pre-created NFC tag through the terminal apparatus;
analyzing the order to obtain an identification code, transaction information and user information in the order; and
sending the transaction information and the user information to a third-party service provider corresponding to the identification code to complete an order operation.

Some advantageous effects of the present disclosure may include: a server sends an order to a corresponding third-party service provider. Thus, a user does not need to use a service software or a website provided by a different third-party service provider to submit an order, and a server identifies a third-party service provider corresponding to an order, and sends the order to the corresponding third-party service provider. Thus, time for obtaining third-party services by the user through a mobile terminal is reduced, and convenience for obtaining the third-party services is improved. In addition, since the third-party service provider can immediately begin to provide services for users after accessing to the server and registering without developing application programs or building service websites customer service systems by its own, service costs are saved tremendously, and service efficiency is improved.

The method further includes: generating order status information in accordance with a processing situation of the order, and sending the order status information to the terminal apparatus.

Some advantageous effects of the present disclosure may include: a server feeds back order status to a terminal apparatus, such that the user can know a processing situation of an order in real time, and the user can conveniently query the processing situation of the order, thus convenience for obtaining third-party services is further improved.

The method further includes: carrying out statistics of transaction data of the third-party service provider according to the order.

The method further includes: carrying out statistics of consumption information of the user according to the order, and feeding back the consumption information of the user to the terminal apparatus.

Some advantageous effects of the present disclosure may include: a server carries out statistics of transaction data of a third-party service provider or consumption information of a user, and respectively supplies the transaction data or the consumption information of the user to the third-party service provider or the user. The third-party service provider can obtain accurate transaction date without carrying out statistics by itself, thus service costs are saved tremendously, and service efficiency is improved. By the consumption information provided by the server, the user can accurately know his/her consumption record, and can conveniently query past consumption record, thus improving the user's feelings.

According to a fifth aspect of the embodiments of the present disclosure, there is provided a server, including:
a receiving module configured to receive an order sent by a terminal apparatus, the order being generated by tag data obtained by scanning a pre-created NFC tag through the terminal apparatus;
an analyzing module configured to analyze the order to obtain an identification code, transaction information and user information in the order; and
a sending module configured to send the transaction information and the user information to a third-party service provider corresponding to the identification code to complete an order operation.

The server further includes:
an order status generating module configured to generate order status information in accordance with a processing situation of the order; and
the sending module is configured to send the order status information to the terminal apparatus.

The server further includes:
a first statistics module configured to carry out statistics of transaction data of the third-party service provider according to the order.

The server further includes:
a second statistics module configured to carry out statistics of consumption information of the user according to the order; and
the sending module is configured to feed back the consumption information of the user to the terminal apparatus.

According to a sixth aspect of the embodiments of the present disclosure, there is provided a server including a storage and one or more programs, wherein the one or more programs are stored in the storage and are configured to be executed by one or more processors, the one or more programs include instructions for performing operations of:
receiving an order sent by a terminal apparatus, the order being generated by tag data obtained by scanning a pre-created NFC tag through the terminal apparatus;
analyzing the order to obtain an identification code, transaction information and user information in the order; and
sending the transaction information and the user information to a third-party service provider corresponding to the identification code to complete an order operation.

According to a seventh aspect of the embodiments of the present disclosure, there is provided a program product having stored therein instructions that, when executed by one or more processors of the terminal apparatus as above, causes the terminal apparatus to perform:
receiving an order sent by a terminal apparatus, the order being generated by tag data obtained by scanning a pre-created NFC tag through the terminal apparatus;
analyzing the order to obtain an identification code, transaction information and user information in the order; and
sending the transaction information and the user information to a third-party service provider corresponding to the identification code to complete an order operation.

It is to be understood that both the foregoing general description and the following detailed description are exemplary only and are not restrictive of the present disclosure.

Hereinafter, technical solutions of the present disclosure are further described in detail by the accompanying drawings and embodiments.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.

The accompanying drawings are included to provide a further understanding of the present disclosure and constitute a part of this specification, and together with the embodiments of the present disclosure serve to explain the present disclosure, which do not limit the present disclosure. In the drawings:
Fig. 1 is an illustrative flow chart showing a method for transmitting NFC data applied to a terminal apparatus according to an illustrative embodiment;
Fig. 2 is a diagram showing an order on an interface of a terminal apparatus according to an illustrative embodiment;
Fig. 3 is an illustrative flow chart showing a method for transmitting NFC data applied to a server according to an illustrative embodiment;
Fig. 4 is an illustrative structure diagram showing a terminal apparatus according to an illustrative embodiment;
Fig. 5 is an illustrative structure diagram showing a server according to an illustrative embodiment;
Fig. 6 is another illustrative structure diagram showing a terminal apparatus according to an illustrative embodiment;
Fig. 7 is another illustrative structure diagram showing a server according to an illustrative embodiment.

The apparent embodiments of the present disclosure are illustrated by the above-mentioned drawings, and detailed descriptions will be given hereinafter. These drawings and literal descriptions do not intend to limit the scope of concept of the present disclosure in any manner, but to explain the concept of the present disclosure for those skilled in the art by referring to exemplary embodiments.

### DETAILED DESCRIPTION

In order to make purposes, technical solutions and advantages of the present disclosure more clear, hereinafter, the present disclosure will be further described in detail in conjunction with embodiments and the drawings. Herein, illustrative embodiments and their explanations of the present disclosure serve to explain the present disclosure, but do not limit the present disclosure.

The present disclosure redefines data format of an NFC tag, such that if data identified by a terminal apparatus is a service request, a service order is transmitted to a third-party service provider through a server, and users' orders can be processed in the server so as to provide services for the users.

The embodiments of the present disclosure provide a method, a terminal apparatus and a server for transmitting NFC data, and the present disclosure is explained in detail below in combination with the drawings.

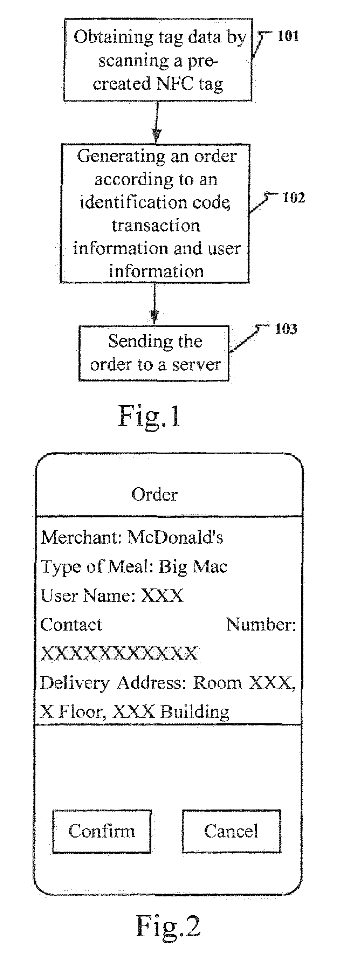

In one embodiment, as shown in Fig.1, there is provided a method for transmitting NFC data applied to a terminal apparatus, and the method includes the following steps.

In step 101, tag data is obtained by scanning a pre-created NFC tag, wherein the tag data includes at least an identification code and transaction information of a third-party service provider.

In step 102, an order is generated according to the identification code, the transaction information and user information.

In step 103, the order is sent to a server; wherein the order is interpreted by a server to obtain the identification code, the transaction information and the user information, and the transaction information and the user information are sent to the third-party service provider corresponding to the identification code by the server to complete an operation of submitting the order.

In the present embodiment, transaction information are contents of a service subscribed by a user, for example, if an NFC tag for ordering McDonald's take-away food is taken as an example, the transaction information can be types of meals to be ordered; and if an NFC tag for paying phone bill is taken, the transaction information can be the amount of the phone bill.

In the present application, tag data in the NFC tag includes an identification code and transaction information of a third-party service provider. A terminal apparatus determines the third-party service provider and generates a corresponding order to be sent to the server according to the identification code. Thus, a user does not need to use a service software or a website provided by a different third-party service provider to submit an order. The server identifies a third-party service provider corresponding to the order, and sends the order to the corresponding third-party service provider. Thus, time for obtaining third-party services by the user through the mobile terminal is reduced, and convenience for obtaining the third-party services is improved. In addition, since the third-party service provider can immediately begin to provide services for users after accessing to the server and registering without developing application programs or building a service website customer service system by its own, service costs are tremendously saved, and service efficiency is improved.

In the present embodiment, prior to the step 101, the identification code and the transaction information of the third-party service provider can be pre-written into the NFC tag.

In the present embodiment, an identification code and transaction information of a third-party service provider are pre-stored in the NFC tag, the information is not required to be input each time when a user creates an order. By simply scanning the NFC tag, the information can be automatically synthesized to form an order, thus time costs of obtaining third-party services by the user is reduced, and convenience for obtaining the third-party services is improved.

In the present embodiment, the user information in the step 102 can be obtained by the following three ways.
(1) the user information is pre-stored in an NFC tag, and is obtained by scanning the NFC tag through a terminal apparatus;
   the user information stored in the NFC tag is required to be encrypted, and the encrypted user information is written into the NFC tag through the terminal apparatus;
   when the encrypted user information is included in tag data, after obtaining the tag data by scanning the pre-created NFC tag, the terminal apparatus decrypts the encrypted user information to obtain the user information.
   The user information stored in the NFC tag is encrypted, such that only a specific terminal apparatus can read the user information in the NFC tag, thereby safety of user privacy information is improved.
   Moreover, the user information is pre-stored in the NFC tag, the information is not required to be input each time when a user creates an order. By simply scanning the NFC tag, the information can be automatically synthesized to form an order, thus time costs of obtaining third-party services by the user is reduced, and convenience for obtaining the third-party services is improved.
(2) The user information is obtained locally, or the user information is input by the user, at this time, the user information is not required to be encrypted.
   By storing the user information locally or inputting the user information by the user, privacy safety of the user is improved, thus time costs of obtaining the third-party services by the user is saved, and convenience for obtaining the third-party services is improved.
(3) The user information is obtained through a server;
   For example, when the user calls a taxi, his/her location is directly positioned by a GPS, and positioning results are used as user information. By obtaining the user information through the server, accuracy and convenience for obtaining the user information are increased, user input is reduced, thus time costs of obtaining the third-party services by the user is saved, and convenience for obtaining the third-party services is improved.

Hereinafter, the method of the present embodiment will be explained by an example, a user can pre-write in an erasable NFC tag through a terminal apparatus:
Identification Code of Third-Party Service Provider: 000001 (McDonald's)
Transaction Information: Type of Meal: Big Mac,
User Information:
User Name: XXX,
Contact Number: xxxxxxxxxxx,
Delivery Address: room XXX, X floor, XXX Building.

When a user makes a terminal apparatus come into contact with this NFC tag, as shown in Fig.2, the above order appears on an interface of the terminal apparatus. After the order is confirmed by the user, the terminal apparatus sends the order to a server, the server sends the order to McDonald's, and McDonald's deliveries fast-food to the user after receiving this order.

As can be seen by the above specific example, an operation of ordering food each time by the user is very simple, it is only required to scan the NFC tag using the terminal apparatus and confirm it on an user interface, there is no need to input types of meals to be ordered and user information required for ordering the food every time, thus time for obtaining third-party services by the user through the terminal apparatus is reduced, and convenience for obtaining the third-party services is increased.

The method of the present embodiment further includes: receiving, in real-time, order status information generated in accordance with a processing situation of the order from the server or the third-party service provider. The terminal apparatus obtains the order status information in real-time, such that the user can know the processing situation of the order in real-time, and can conveniently query the processing situation of the order, thus convenience for obtaining the third-party services is further improved.

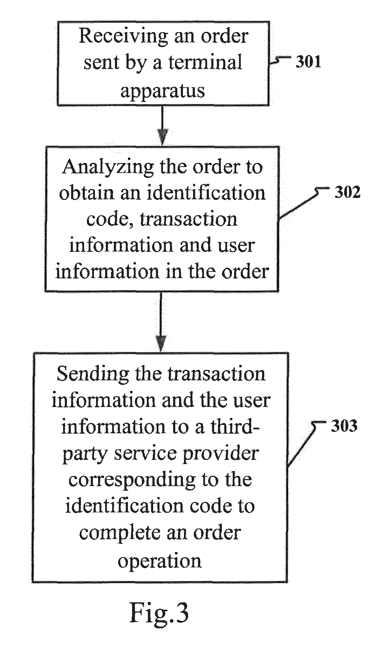

In another embodiment, as shown in Fig.3, the present disclosure provides a method for transmitting NFC data applied to a server, and the method includes the following steps.

In step 301, an order sent by a terminal apparatus is received, the order is generated by tag data obtained by scanning a pre-created NFC tag through the terminal apparatus.

In step 302, the order is interpreted to obtain an identification code, transaction information and user information in the order.

In step 303, the transaction information and the user information are sent to a third-party service provider corresponding to the identification code to complete an order operation.

In the present embodiment, a server sends an order to a corresponding third-party service provider. Thus, a user does not need to use a service software or a website provided by a different third-party service provider to submit an order. The server identifies a third-party service provider corresponding to an order, and sends the order to the corresponding third-party service provider. Thus, time for obtaining third-party services by the user through the mobile terminal is reduced, and convenience for obtaining the third-party services is improved. In addition, since the third-party service provider can immediately begin to provide services for users after accessing to the server and registering without developing application programs or building a service website customer service system by its own, service costs are saved tremendously, and service efficiency is improved.

The method of the present embodiment further includes: generating order status information in accordance with a processing situation of the order, and sending the order status information to the terminal apparatus. A server feeds back order status to a terminal apparatus, such that the user can know a processing situation of an order in real time, and the user can conveniently query the processing situation of the order, thus convenience for obtaining third-party services is further improved.

The method of the present embodiment further includes: carrying out statistics of transaction data of the third-party service provider according to the order, for example, how many orders are obtained by McDonald's through the server, and how much is the total amount of the orders.

The method of the present embodiment further includes: carrying out statistics of consumption information of a user according to the order, and feeding back the consumption information of the user to the terminal apparatus, for example, how many orders are created by the user through the server, wherein how many orders are sent to McDonald's, how many times for calling taxies, and how much money is spent for each service.

In the present embodiment, a server carries out statistics of transaction data of a third-party service provider or consumption information of a user, and respectively supplies the transaction data or the consumption information of the user to the third-party service provider or the user. The third-party service provider can obtain accurate transaction date without carrying out statistics by itself, thus service costs are saved tremendously, and service efficiency is improved. By using the consumption information provided by the server, the user can accurately know his/her consumption record, and can conveniently query past consumption record, thus improving user's feelings.

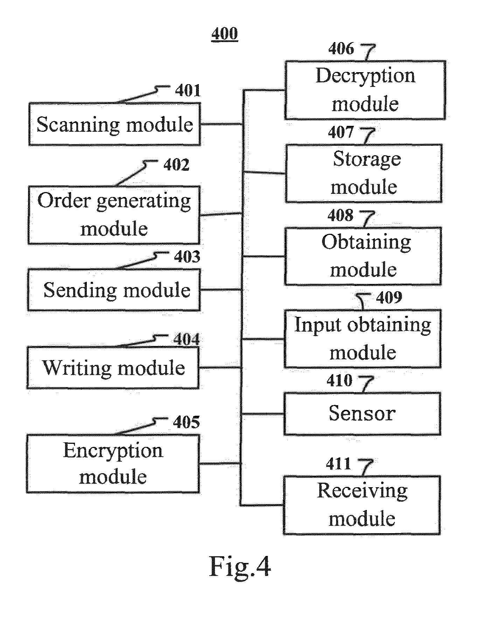

In another embodiment, as shown in Fig.4, the present disclosure provides a terminal apparatus 400, including:
a scanning module 401 configured to obtain tag data by scanning a pre-created NFC tag, wherein the tag data includes at least an identification code and transaction information of a third-party service provider;
an order generating module 402 configured to generate an order according to the identification code, the transaction information and user information; and
a sending module 403 configured to send the order to a server; wherein the order is interpreted by a server to obtain the identification code, the transaction information and the user information, and the transaction information and the user information are sent to the third-party service provider corresponding to the identification code by the server to complete an operation of submitting the order.

In the present embodiment, the terminal apparatus 400 further includes: a writing module 404 configured to write the identification code and the transaction information of the third-party service provider into the NFC tag.

In the present embodiment, the terminal apparatus 400 further includes: an encryption module 405 and a decryption module 406, wherein the encryption module 405 is configured to encrypt the user information; the writing module 404 is configured to write the encrypted user information into the NFC tag; and the decryption module 406 is configured to decrypt the encrypted user information to obtain the user information.

In the present embodiment, the terminal apparatus 400 further includes: a storage module 407 configured to store the user information; and an obtaining module 408 configured to obtain the user information from the storage module. Or the terminal apparatus 400 further includes: an input obtaining module 409 configured to obtain the user information according to user input.

In the present embodiment, the terminal apparatus 400 further includes: a sensor 410 configured to obtain the user information.

In the present embodiment, the terminal apparatus 400 further includes: a receiving module 411 configured to receive, in real-time, order status information generated in accordance with a processing situation of the order from the server or the third-party service provider.

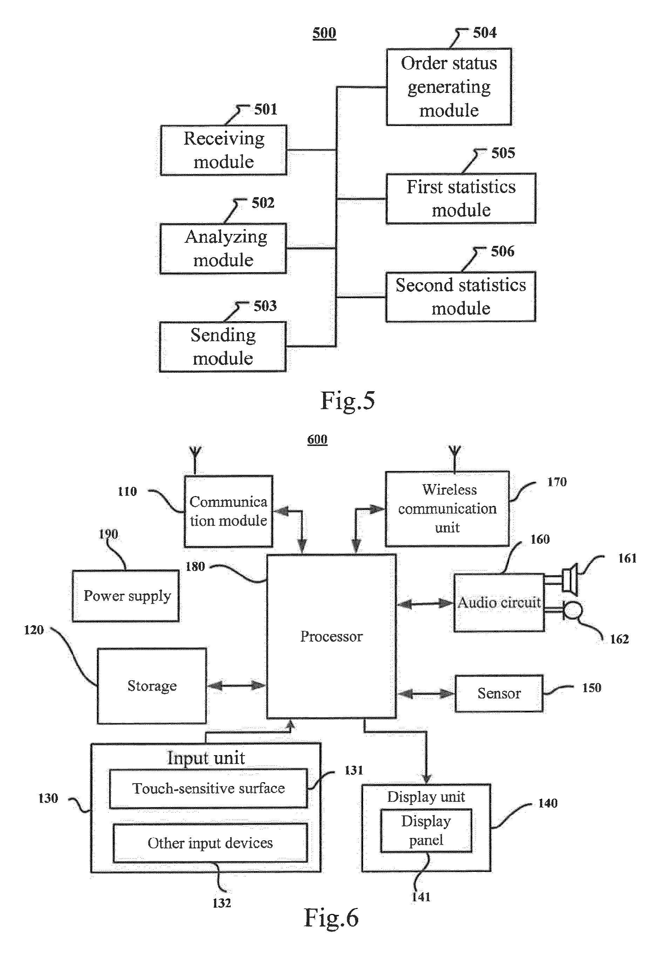

In another embodiment, as shown in Fig.5, the present disclosure provides a server 500, including:
a receiving module 501 configured to receive an order sent by a terminal apparatus, the order being generated by tag data obtained by scanning a pre-created NFC tag through the terminal apparatus;
an analyzing module 502 configured to interpret the order to obtain an identification code, transaction information and user information in the order; and
a sending module 503 configured to send the transaction information and the user information to a third-party service provider corresponding to the identification code to complete an order operation.

In the present embodiment, the server 500 further includes:
an order status generating module 504 configured to generate order status information in accordance with a processing situation of the order; and
the sending module 503 is configured to send the order status information to the terminal apparatus.

In the present embodiment, the server 500 further includes:
a first statistics module 505 configured to carry out statistics of transaction data of the third-party service provider according to the order.

In the present embodiment, the server 500 further includes:
a second statistics module 506 configured to carry out statistics of consumption information of a user according to the order; and
the sending module 503 is configured to feed back the consumption information of the user to the terminal apparatus.

Fig.6 is a structure diagram of a terminal apparatus in the embodiments of the present disclosure. Referring to Fig.6, the terminal may be used to implement the method provided in the above embodiments.

For example, a terminal apparatus 600 may include a communication unit 110, a storage 120 including one or more computer readable storage media, an input unit 130, a display unit 140, a sensor 150, an audio circuit 160, a WiFi (wireless fidelity) module 170, a processor 180 including one or more processing cores and a power supply 190 or the like. Those skilled in the art could understand, a structure of a terminal apparatus shown in Fig.10 does not limit the terminal apparatus, and the terminal apparatus may include more or less parts than those of Fig.10, or may combine certain parts, or may have different arrangements of parts. Wherein:

The communication unit 110 may be used to receive and send signals in receiving and sending information or in a process of phone calling, and the communication unit 110 may be a network communication apparatus such as an RF (Radio Frequency) circuit, a router, a modem. Particularly, when the communication unit 110 is the RF circuit, after downlink information is received from a base station, the downlink information is processed by one or more processor 180; and in addition, uplink data is sent to the base station. Generally, the RF circuit as the communication unit includes an antenna, at least one amplifier, a tuner, one or more oscillators, a subscriber identity module (SIM) card, a transceiver, a coupler, a LNA (Low Noise Amplifier) and a duplexer, etc., but it is not limited thereto. Furthermore, the communication unit 110 may also communicate with a network and other apparatuses by wireless communication. The wireless communication may use any communication standard or protocol including GSM (Global System of Mobile communication), GPRS (General Packet Radio Service), CDMA (Code Division Multiple Access), WCDMA (Wideband Code Division Multiple Access), LTE (Long Term Evolution), E-mail, SMS (Short Messaging Service) or the like, but it is not limited thereto. The storage 120 may be used to store software programs and modules, and the processor 180 executes various kinds of function applications and data processings by operating the software programs and modules stored in the storage 120. The storage 120 may mainly include a program storing area and a data storing area, wherein the program storing area may store an operating system, at least one application program required for functions such as a sound playing function, an image playing function or the like; and the data storing area may store data such as audio data and a telephone book, etc., created in accordance with the use of the terminal apparatus 600. Furthermore, the storage 120 may include a high speed random access memory or a nonvolatile memory, or for example, at least one magnetic disk storage device, a flash memory device or other nonvolatile solid-state memory devices. Correspondingly, the storage 120 may also include a storage controller, to provide the processor 180 and the input unit 130 with an access to the storage 120.

The input unit 130 may be used to receive figures or character information that are input, and generate signal input of a keyboard, a mouse, an operating stick, an optical device or a trackball related to user settings and function control. For example, the input unit 130 may include a touch-sensitive surface 131 and other input apparatuses 132. The touch-sensitive surface 131 which is also referred to as a touch display screen or a touch panel, may collect touch operations from a user thereon or nearby (for example, operations on the touch-sensitive surface 131 or near the touch-sensitive surface 131 by a user using any appropriate object or accessory such as a finger, or a touch pen, etc.), and may drive a corresponding connecting device according to a preset program. Alternatively, the touch-sensitive surface 131 may include two portions including a touch detection device and a touch controller. Wherein the touch detection device detects touch orientations of a user, and detects signals brought up by touch operations, then transmits the signals to the touch controller; the touch controller receives touch information from the touch detection device, and converts the touch information into coordinates of touch points to be sent to the processor 180, and the touch controller receives commands sent from the processor 180 and execute the commands. Furthermore, the touch-sensitive surface 131 may be realized by using various types of manners such as resistance-type, capacitance-type, infrared ray and surface acoustic wave. In addition to the touch-sensitive surface 131, the input unit 130 may also include other input apparatuses 132. For example, the other input apparatuses 132 may include one or more physical keyboards, a function key (such as a volume control key, or a switching key, etc.), a trackball, a mouse and an operating stick, but it is not limited thereto.

The display unit 140 may be used to display information input by a user or information supplied to the user and various kinds of graphical user interfaces of the terminal apparatus 600, and these graphical user interfaces may consist of graph, text, icon, video or any combination thereof. The display unit 140 may include a display panel 141, and alternatively, the display panel 141 may be configured by using LCD (Liquid Crystal Display), OLED (Organic Light-Emitting Diode) or the like. Further, the touch-sensitive surface 131 may cover the display panel 141, and after the touch-sensitive surface 131 detects touch operations thereon or nearby, the touch-sensitive surface 131 transmits the touch operations to the processor 180 to determine types of touch events, subsequently, the processor 180 provides a corresponding visual output on the display panel 141 according to the types of the touch events. In Fig.10, although the touch-sensitive surface 131 and the display panel 141 be two separate parts to realize input and output functions, in some certain embodiments, the touch-sensitive surface 131 and the display panel 141 may be integrated to realize the input and output functions.

The terminal apparatus 600 may also include at least one kind of sensor 150 such as a light sensor, a motion sensor and other sensors. For example, the light sensor may include an ambient light sensor and a proximity sensor, wherein the ambient light sensor may adjust luminance of the display panel 141 according to luminance of ambient light, the proximity sensor may turn off the display panel 141 and/or its backlight when the terminal apparatus 600 moves to an ear. As one of motion sensors, a gravity acceleration sensor may detect values of accelerations in respective directions (usually, three-axis), and may detect a value and a direction of gravity when in stationary state, and may be used in applications for identifying a phone pose (such as switching between horizontal and vertical screens, related games, magnetometer pose calibration), related functions of vibration identification (such as a pedometer, a knock), etc.; the terminal apparatus 600 may also be configured with other sensors such a gyroscope, a barometer, a hygrometer, a thermometer, an infrared sensor, etc., which are not described repeatedly.

The audio circuit 160, a speaker 161 and a microphone 162 may provide an audio interface between a user and the terminal apparatus 600. The audio circuit 160 may convert received audio data into electrical signals and transmit the electrical signals to the speaker 161, then the speaker 161 converts the electrical signals into sound signals to be output; on the other hand, the microphone 162 converts collected sound signals into electrical signals, the audio circuit 160 receives the electrical signals and converts the electrical signals into audio data, the audio data is output to the processor 180 to be processed, then the audio data is sent to another terminal apparatus through the RF circuit 110, or the audio data is output to the storage 120 to be further processed. The audio circuit 160 may include an earplug jack, to provide communication between a peripheral headset and the terminal apparatus 600.

In order to realize wireless communication, the terminal apparatus may be configured with a wireless communication unit 170, the wireless communication unit 170 may be a WiFi module. WiFi belonging to a short-distance wireless transmission technology, through which the terminal apparatus 600 may assistant a user to receive and send emails, browse webpage and access streaming media, provides the user with wireless broadband Internet access. Although Fig.10 shows the wireless communication unit 170, it shall be understood that the terminal apparatus 600 does not have to include the wireless communication unit 170, and the wireless communication unit 170 can be completely omitted as needed within a scope that does not change the nature of the present disclosure.

The processor 180 is a control center of the terminal apparatus 600, couples to respective parts of an entire telephone by using various kinds of interfaces and circuits, and executes various kinds of functions of the terminal apparatus 600 and processes data by operating or executing software programs and/or modules stored in the storage 120 and calling data stored in the storage 120, thereby to monitor the entire telephone. Alternatively, the processor 180 may include one or more processing cores; for example, the processor 180 may integrate an application processor and a modulation-demodulation processor, wherein the application processor mainly processes an operating system, a user interface and an application program, and the modulation-demodulation processor mainly processes wireless communication. It may be understood that the modulation-demodulation processor may not be integrated into the processor 180.

The terminal apparatus 600 also includes the power supply 190 (such as a battery) that supplies power to the respective parts, for example, the power supply may be logically coupled with the processor 180 by a power supply management system, thereby realizing functions such as management of charging, discharging and power consumption by the power supply management system. The power supply 190 may also include any component such as one or more DC or AC power supplies, a recharging system, a power supply failure detection circuit, a power supply converter or inverter, a power supply state indicator.

Although not shown, the terminal apparatus 600 may also include a camera, or a Bluetooth module, etc., which is not described repeatedly.

Specifically, in the present embodiment, a display unit of the terminal apparatus is a touch screen display, and the terminal apparatus further includes a storage, and one or more programs, wherein the one or more programs are stored in the storage and are configured to be executed by the one or more processors, and the one or more programs include instructions for performing operations of:
obtain tag data by scanning a pre-created NFC tag, wherein the tag data includes at least an identification code and transaction information of a third-party service provider;
generate an order according to the identification code, the transaction information and user information; and
send the order to a server;
wherein the order is interpreted by a server to obtain the identification code, the transaction information and the user information, and the transaction information and the user information are sent to the third-party service provider corresponding to the identification code by the server to complete an operation of submitting the order.

The one or more programs further include an instruction for performing an operation of: writing the identification code and the transaction information of the third-party service provider into the NFC tag.

The one or more programs further include an instruction for performing an operation of: encrypting the user information and writing the encrypted user information into the NFC tag; and
when the encrypted user information is included in the tag data, after obtaining the tag data by scanning the pre-created NFC tag, decrypting the encrypted user information to obtain the user information.

The one or more programs further include an instruction for performing an operation of: obtaining the user information locally, or obtaining the user information according to user input.

The one or more programs further include an instruction for performing an operation of: obtaining the user information through a sensor.

The one or more programs further include an instruction for performing an operation of: receiving, in real-time, order status information generated in accordance with a processing situation of the order from the server or the third-party service provider.

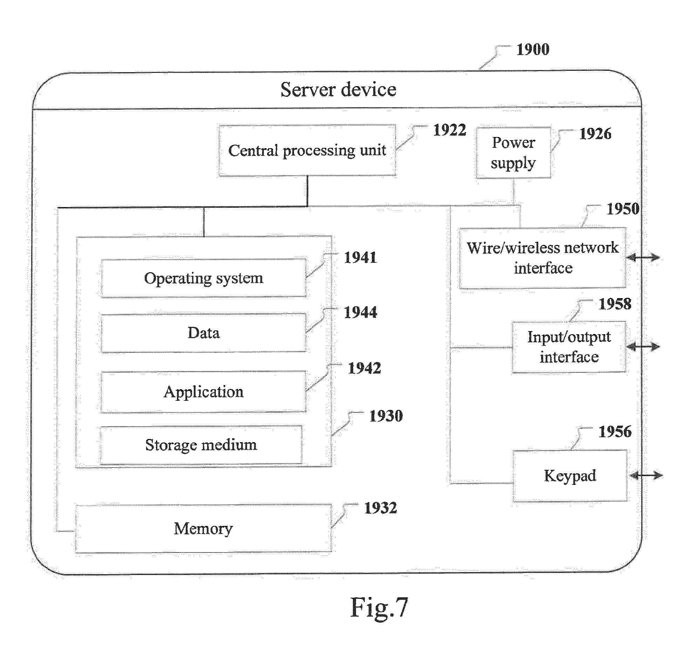

Fig.7 is a structure diagram of a server in the embodiments of the present disclosure. A server 1900 causes great differences due to different configurations and performances, and may include one or more central processing units (CPU) 1922 (such as one or more processors) and a memory 1932, one or more storage mediums 1930 (such as one or more mass-storage devices) for storing applications 1942 or data 1944. The memory 1932 and the storage medium 1930 may be used for short-time storage or persistent storage. Programs stored in the storage medium 1930 may include one or more modules (not shown in the drawings), and each module may include a series of instruction operations in a server. Further, the CPU 1922 may be provided to communicate with the storage medium 1930, and a series of instruction operations in the storage medium 1930 are executed on the server 1900.

The server 1900 may also includes one or more power supplies 1926, one or more wire or wireless network interfaces 1950, one or more input/output interfaces 1958, one or more keyboards 1956, and/or one or more operating systems 1941, such as Windows ServerTM, Mac OS XTM, UnixTM, LinuxTM, FreeBSDTM, or the like.

Specifically, in the present embodiment, the server further includes a storage, and one or more programs, wherein the one or more programs are stored in the storage and are configured to be executed by the one or more processors, and the one or more programs include instructions for performing operations of:
receiving an order sent by a terminal apparatus, the order being generated by tag data obtained by scanning a pre-created NFC tag through the terminal apparatus;
analyzing the order to obtain an identification code, transaction information and user information in the order; and
sending the transaction information and the user information to a third-party service provider corresponding to the identification code to complete an order operation.

The one or more programs further include an instruction for performing an operation of: generating order status information in accordance with a processing situation of the order, and sending the order status information to the terminal apparatus.

The one or more programs further include an instruction for performing an operation of: carrying out statistics of transaction data of the third-party service provider according to the order.

The one or more programs further include an instruction for performing an operation of: carrying out statistics of consumption information of the user according to the order, and feed back the consumption information of the user to the terminal apparatus.

In addition, the mobile terminal according to the present disclosure may typically be various handheld terminal apparatuses, such as a mobile phone, a personal digital assistant (PDA) and the like. Therefore, the scope of the present disclosure is not limited to a particular type of mobile terminal.

In addition, the method according to the present disclosure may also be implemented by a computer program executed by a CPU. When executed by the CPU, the computer program performs the above functions defined in the method according to the present disclosure.

In addition, the above steps of the method and the units of the system may also be implemented with a controller and a computer-readable storage device which stores computer programs that cause the controller to realize the above steps and functions of the units.

In addition, it should be appreciated that the above mentioned computer-readable storage device (such as storage) may be a volatile memory or a nonvolatile memory, or may include the both. For example, but without limitation, the nonvolatile memory may include a read only memory (ROM), a programmable ROM (PROM), an electrically programmable ROM (EPROM), an electrically erasable programmable ROM (EEPROM), or a flash memory. The volatile memory may include a random access memory (RAM) which may serve as an external cache RAM memory. As an example, but without limitation, the RAM may be of various forms, such as a synchronous RAM (DRAM), a dynamic RAM (DRAM), a synchronous DRAM (SDRAM), a double data rate SDRAM (DDR SDRAM), an enhanced SDRAM (ESDRAM), a synchronous link DRAM (SLDRAM) and a direct Rambus RAM (DRRAM). The storage device according to the disclosed aspects is intended to include but not limited to these and other suitable types of memories.

It should be appreciated by those skilled in the art that, various exemplary logical blocks, modules, circuits, and algorithm steps described in conjunction with the present disclosure may be implemented as electronic hardware, computer software or combination of both. In order to clearly illustrate the interchangeability between the hardware and the software, a general description has been given to various illustrative components, blocks, modules, circuits and functions of steps. Whether such functions will be implemented as software or hardware depends on the particular application and the restriction from the design of the whole system. Those functions may be realized in various means for each of the particular application by those skilled in the art without departing the scope of the present disclosure.

Various illustrative logical blocks, modules and circuits described in conjunction with the present disclosure may be implemented or performed by the following components that are designed to perform the above functions: a general purpose processor, a digital signal processor (DSP), a dedicated integrated circuit (ASIC), a field programmable gate array (FPGA) or other programmable logic devices, discrete gates or transistor logics, discrete hardware components or any combination of these components. The general purpose processor may be a microprocessor. Alternatively, the processor may be any one of a conventional processor, a controller, a microcontroller, or a state machine. The processor may be implemented as combination of computing devices, such as combination of a DSP and a microprocessor, a plurality of microprocessors, one or more microprocessors in conjunction with a DSP core, or any other such configuration.

The method and steps of the algorithm described in conjunction with the present disclosure may be directly contained in hardware, in a software module executed by a processor or in combination of the both. The software module may reside in a RAM memory, a flash memory, a ROM memory, an EPROM memory, an EEPROM memory, a registers, a hard disk, a removable disk, a CD-ROM, or any other storage medium known in the art. An exemplary storage medium is coupled to the processor such that the processor can read information from the storage medium or write information thereto. In an alternative embodiment, the storage medium may be integrated with the processor. The processor and the storage medium may reside in an ASIC which may reside in a user terminal. In an alternative embodiment, the processor and the storage medium may reside in a user terminal as discrete components.

In one or more exemplary designs, the above functions may be implemented in hardware, software, firmware, or any combination thereof. If implemented in software, the above functions may be stored in a computer readable medium as one or more instructions or codes, or transmitted through the computer readable medium. The computer readable medium includes computer storage medium and communication medium. The communication media includes any medium that may be used to transmit computer programs from one location to another location. The storage medium may be any available medium that is accessible by a general or special computer. For example, but without limitation, the computer readable medium may include a RAM, a ROM, an EEPROM, a CD-ROM or other CD storage devices, disk storage device or other magnetic storage devices, or any other medium that may be used to carry or store the required program codes in a form of instructions or data structure and may be accessible by a general or special computer or a general or special processor. In addition, any connection may be appropriately called as a computer-readable medium. For example, if a coaxial cable, a fiber optic cable, a twisted pair, a digital subscriber line (DSL) or wireless technologies such as infrared rays, radio and microwave are used to transmit software from a website, a server or other remote source, the above coaxial cable, the fiber optic cable, the twisted pair, the DSL or wireless technologies such as infrared rays, radio and microwave are all within the definition of the medium. As used herein, the disk and the optical disk includes a compression disk (CD), a laser disc, an optical disk, a digital versatile disc (DVD), a floppy disks, a blue-ray disk, among which the magnetic disk normally represents data magnetically, and the optical disk represents data optically by utilizing a laser. The combination of the above contents should also be included in the scope of the computer readable medium.

In an exemplary embodiment, there is provided a program product having stored therein instructions that, when executed by one or more processors of the terminal apparatus as above, causes the terminal apparatus to perform:
receiving an order sent by a terminal apparatus, the order being generated by tag data obtained by scanning a pre-created NFC tag through the terminal apparatus;
analyzing the order to obtain an identification code, transaction information and user information in the order; and
sending the transaction information and the user information to a third-party service provider corresponding to the identification code to complete an order operation.

Although the exemplary embodiments of the present disclosure has been illustrated in the above contents, it should be noted that, various s and modifications may be made without departing the scope of the present disclosure that is defined by the claims. The functions, steps and/or operations of the method claims according to the described embodiments of the present disclosure, may not necessarily be performed in a particular order. In addition, although elements of the present disclosure may be described or prescribed in a single form, multiple forms may also be devised, unless the single form is explicitly prescribed.

The objects, technical solutions and advantageous effects of the present disclosure have been explained in a further detail with the above specific embodiments. It should be appreciated that, the above are merely specific embodiments of the present disclosure, and not used to limit the scope of the present disclosure. Any alteration, equivalent replacement, modification and the like are embraced in the protection scope of the present disclosure.

## Claims

1. A method for transmitting NFC data, **characterized in that** the method comprises:
obtaining (101)tag data by scanning a pre-created NFC tag, wherein the tag data includes at least an identification code and transaction information of a third-party service provider;
generating (102) an order according to the identification code, the transaction information and user information; and
sending (103) the order to a server,
wherein the order is interpreted by a server to obtain the identification code, the transaction information and the user information, and the transaction information and the user information are sent to the third-party service provider corresponding to the identification code by the server to complete an operation of submitting the order.

2. The method according to claim 1, **characterized in that** the method further comprises:
writing the identification code and the transaction information of the third-party service provider into the NFC tag.

3. The method according to claim 1 or 2, **characterized in that** the method further comprises:
encrypting the user information and writing the encrypted user information into the NFC tag;
decrypting the encrypted user information to obtain the user information and;
obtaining the user information locally, or obtaining the user information according to user input.

4. The method according to claim 1, 2, or 3, **characterized in that** the method further comprises:
obtaining the user information through a sensor.

5. The method according to any preceding claim, **characterized in that** the method further comprises:
receiving, in real-time, order status information generated in accordance with a processing situation of the order from the server or the third-party service provider.

6. A terminal apparatus (400), **characterized in that** the apparatus comprises:
a scanning module (401) configured to obtain tag data by scanning a pre-created NFC tag, wherein the tag data includes at least an identification code and transaction information of a third-party service provider;
an order generating module (402) configured to generate an order according to the identification code, the transaction information and user information; and
a sending module (403) configured to send the order to a server; wherein the order is interpreted by a server to obtain the identification code, the transaction information and the user information, and the transaction information and the user information are sent to the third-party service provider corresponding to the identification code by the server to complete an operation of submitting the order.

7. The terminal apparatus according to claim 6, **characterized in that** the apparatus further comprises:
a writing module (404) configured to write the identification code and the transaction information of the third-party service provider into the NFC tag.

8. The terminal apparatus according to claim 6 or 7, **characterized in that** the apparatus further comprises an encryption module (405);
the encryption module is configured to encrypt the user information;
the writing module is configured to write the encrypted user information into the NFC tag; and
a decryption module (406) configured to decrypt the encrypted user information to obtain the user information.

9. The terminal apparatus according to claim 6, 7 or 8, **characterized in that** the apparatus further comprises:
a storage module (407) configured to store the user information;
an obtaining module (408)configured to obtain the user information from the storage module;
or the device further comprises:
an input obtaining module (409) configured to obtain the user information according to user input.

10. The terminal apparatus according to claim 6, 7, 8 or 9 **characterized in that** the apparatus further comprises:
a receiving module configured to receive, in real-time, order status information generated in accordance with a processing situation of the order from a server or the third-party service provider.

11. A terminal apparatus, **characterized in that** the terminal apparatus comprises a storage and one or more programs, wherein the one or more programs are stored in the storage and are configured to be executed by one or more processors, the one or more programs comprise instructions for performing operations of any of claims 1 to 5.

12. A method for transmitting NFC data, **characterized in that** the method comprises:
receiving an order sent by a terminal apparatus as defined in any of claims 6 to 11, the order being generated by tag data obtained by scanning a pre-created NFC tag through the terminal apparatus;
analyzing the order to obtain an identification code, transaction information and user information in the order; and
sending the transaction information and the user information to a third-party service provider corresponding to the identification code to complete an order operation.

13. The method according to claim 12, **characterized in that** the method further comprises:
generating order status information in accordance with a processing situation of the order, and sending the order status information to the terminal apparatus.

14. The method according to claim 12 or 13, **characterized in that** the method further comprises:
carrying out statistics of transaction data of the third-party service provider according to the order.

15. The method according to claim 12, 13, or 14 **characterized in that** the method further comprises:
carrying out statistics of consumption information of the user according to the order, and feeding back the consumption information of the user to the terminal apparatus.

16. A server (500), **characterized in that** the server comprises:
a receiving module (501) configured to receive an order sent by a terminal apparatus as defined in any of claims 8 to 12, the order being generated by tag data obtained by scanning a pre-created NFC tag through the terminal apparatus;
an analyzing module (502)configured to analyze the order to obtain an identification code, transaction information and user information in the order; and
a sending module (503) configured to send the transaction information and the user information to a third-party service provider corresponding to the identification code to complete an order operation.

17. The server according to claim 16, **characterized in that** the server further comprises:
an order status generating module (504) configured to generate order status information in accordance with a processing situation of the order; and
the sending module (503) is configured to send the order status information to the terminal apparatus.

18. The server according to claim 16 or 17, **characterized in that** the server further comprises:
a first statistics module (505) configured to carry out statistics of transaction data of the third-party service provider according to the order; and
a second statistics module (500) configured to carry out statistics of consumption information of the user according to the order; and
the sending module is configured to feed back the consumption information of the user to the terminal apparatus.

19. A server (500), **characterized in that** the server comprises a storage and one or more programs, wherein the one or more programs are stored in the storage and are configured to be executed by one or more processors, the one or more programs comprise instructions for performing operations of any of claims 13 to 16.

20. A program product having stored therein instructions, **characterized in that**, when executed by one or more processors of the terminal apparatus according to claim 12, causes the terminal apparatus to perform the apparatus of any of claims 1 to 6.
